# EUROPÄISCHE PATENTSCHRIFT

(11) **EP 3 086 027 B1**
(45) Veröffentlichungstag und Bekanntmachung des Hinweises auf die Patenterteilung: **24.05.2023**
(21) Anmeldenummer: 16157308.4
(22) Anmeldetag: 25.02.2016
(51) Int. Cl.: F21V 8/00

(54) **BELEUCHTUNGSVORRICHTUNG MIT SEITENEMITTIERENDEM LICHTLEITENDEN FASERBÜNDEL**
LIGHTING DEVICE WITH SIDE-EMITTING LIGHT CONDUCTING FIBRE BUNDLE
DISPOSITIF D'ECLAIRAGE AVEC FAISCEAU DE FIBRES PHOTOCONDUCTEURS A EMISSION LATERALE

(30) Priorität: 21.04.2015 DE 102015106049
(43) Veröffentlichungstag der Anmeldung: 26.10.2016
(73) Patentinhaber: SCHOTT AG, 55122 Mainz (DE)
(72) Erfinder: WÖLFING, Bernd, 55122 Mainz (DE); RUSSERT, Hubertus, 55270 Jugenheim (DE); MEINL, Jürgen, 65329 Hohenstein-Holzhausen (DE); GUO, Jia, 41-94-604 Nanjing (CN)
(74) Vertreter: Blumbach · Zinngrebe Patentanwälte PartG mbB

(56) Entgegenhaltungen:
- EP-A1- 0 562 873
- WO-A1-2009/100834
- WO-A1-2011/147877
- DE-A1-102007 014 871
- US-A- 5 042 892
- US-A1- 2005 251 119

## Beschreibung

### Gebiet der Erfindung

Die Erfindung betrifft eine Beleuchtungsvorrichtung mit einem seitenemittierenden Lichtleiter. Insbesondere betrifft die Erfindung eine Beleuchtungsvorrichtung, welche eine LED umfasst, wobei das Licht der LED in ein seitenemittierendes Faserbündel eingekoppelt wird.

Derartige Beleuchtungsvorrichtungen finden insbesondere im Bereich Automotive als Ambientebeleuchtungen Verwendung.

Die Erfindung betrifft des Weiteren eine Hülse, welche verwendet wird, um ein seitenemittierendes Faserbündel zu terminieren und das Licht einer LED in das Faserbündel einzukoppeln.

### Hintergrund der Erfindung

Beleuchtungsvorrichtungen mit seitenemittierenden Lichtleitern sind aus der Praxis bekannt. Es handelt sich dabei insbesondere um Beleuchtungsvorrichtungen, bei welchen das Licht einer Halbleiterlichtquelle, insbesondere einer LED, in ein Bündel aus seitenemittierenden Glas- oder Kunststofffasern eingekoppelt wird. Grundsätzlich besteht eine lichtleitende Faser zumeist aus einem lichtleitenden Kern, welcher von einem Hüllmaterial (Cladding) mit einer niedrigeren Brechzahl umgeben ist.

An der Grenze Kern/Cladding kommt es zu Totalreflektionen, so dass das Licht entlang der Faser geleitet wird. Um für Beleuchtungsanwendungen das Licht über eine längere Strecke zur Seite hin auszukoppeln, sind seitenemittierende Fasern bekannt, bei denen beispielsweise im lichtleitenden Kern Streupartikel vorhanden sind oder bei welchen der Mantel Defektstellen aufweist, an denen das Licht zur Seite hin ausgekoppelt wird. Derartige seitenemittierende Lichtleiter bestehen insbesondere aus einem Glasfaserbündel, welches in einen Schlauch aus Kunststoff eingesetzt ist. Ein derartiges in einen Schlauch eingebrachtes Glasfaserbündel ist biegsam und kann beispielsweise in einem Fahrzeug als Ambientebeleuchtung verlegt werden. Die LEDs befinden sich dabei zumeist in einem Gehäuse, von welchem aus das in einen Schlauch eingebrachte Glasfaserbündel in das Fahrzeug verlegt wird.

Um das Licht der LEDs in das Faserbündel einzukoppeln, ist es bekannt, das Ende des Faserbündels in einem Hüllmaterial einzubetten, welches ausgehärtet wird. Sodann wird das Ende des eingehüllten Faserbündels abgeschnitten und poliert, so dass sich eine Lichteintrittsfläche ausbildet. Diese Vorgehensweise ist sehr aufwendig.

Die Patentschrift DE 10 2008 044 938 B4 (Schott AG) sieht demgegenüber ein Verfahren vor, bei welchem lichtleitende Fasern in eine Hülse eingeführt werden, welche mit einem Klebstoff gefüllt ist. Der Klebstoff wird ausgehärtet und über den transparenten Klebstoff wird das Licht in die Faserkerne eingekoppelt.

Bei seitenemittierenden Ambientebeleuchtungen hat sich aber herausgestellt, dass es zu Inhomogenitäten in der Farbverteilung des Lichtes kommt.

Dies gilt insbesondere in dem Fall, in welchem als Lichtquelle eine sogenannte RGB-Lichtquelle verwendet wird. Derartige Lichtquellen sind beispielsweise als LED-Chip ausgebildet. Auf dem Chip sind dabei dicht nebeneinander drei LEDs verschiedener Farbe angeordnet.

Das Licht dieser LEDs wird bei herkömmlichen Einkoppelmethoden mit unterschiedlicher Intensität in die einzelnen Fasern eingekoppelt. Diese Inhomogenitäten in der Intensitätsverteilung überlagern sich wiederum mit den in der Regel vorhandenen Inhomogenitäten des zur Seite hin ausgekoppelten Lichtanteils.

Bereits kleine Farbveränderungen sind dabei für das menschliche Auge wahrnehmbar.Einkoppelhülsen für optische Faserbündel mit einem lichtmischenden Lichtleiter sind aus der EP0562873, der WO20111478777 und der DE102007014871 bekannt.

### Aufgabe der Erfindung

Der Erfindung liegt demgegenüber die Aufgabe zugrunde, die genannten Nachteile des Standes der Technik zumindest zu reduzieren.

Es ist insbesondere eine Aufgabe der Erfindung, eine einfache Möglichkeit bereitzustellen, mit welcher Inhomogenitäten einer eingangs beschriebenen seitenemittierenden Lichtquelle reduziert werden. Gleichzeitig soll die Einkoppeleffizienz nicht wesentlich verschlechtert werden.

### Zusammenfassung der Erfindung

Die Aufgabe der Erfindung wird durch eine Beleuchtungsvorrichtung mit Hülse nach dem unabhängigen Anspruch 1 gelöst.

Bevorzugte Ausführungsformen und Weiterbildungen der Erfindung sind dem Gegenstand der abhängigen Ansprüche zu entnehmen.

Die Erfindung betrifft eine Beleuchtungsvorrichtung, welche insbesondere für Fahrzeuge vorgesehen ist.

Die Beleuchtungsvorrichtung umfasst zumindest ein seitenemittierendes Faserbündel.

Es handelt sich dabei vorzugsweise um ein Faserbündel aus Glasfasern, welche in einen Schlauch aus einem elastischen Material, insbesondere einem transparenten Kunststoff eingelegt sind. Das Faserbündel emittiert zumindest teilweise zur Seite hin.

Um das Licht einer Lichtquelle, insbesondere einer LED, in das Faserbündel einzukoppeln, ist das Faserbündel in eine Hülse eingesetzt und es wird durch die Hülse Licht einer Lichtquelle in das seitenemittierende Faserbündel eingekoppelt.

Hierzu ist die aus transparentem Material bestehende Hülse abschnittweise topfförmig ausgebildet.

Das vom Schlauch befreite, aber nicht polierte Faserbündel wird in die vorher mit einem transparenten Klebstoff gefüllte Hülse eingeführt und der Klebstoff wird ausgehärtet, wobei es gleichzeitig zu einer mechanischen Fixierung des Faserbündels kommt (sogenannte Terminierung). Um die Einkoppeleffektivität zu verbessern, kann die Brechzahl des Klebstoffes an die Brechzahl des Kerns der seitenemittierenden Fasern des Faserbündels angepasst sein.

Weiter hat vorzugsweise der Klebstoff eine höhere Brechzahl als die Hülse, so dass Hülse und Klebstoff zusammen ebenfalls einen Lichtleiter ausbilden.

Gemäß der Erfindung umfasst die Hülse auf einer dem Faserbündel gegenüberliegenden Seite einen Fortsatz, welcher als Lichtmischer wirksam ist.

Das Licht wird mithin nicht unmittelbar durch den Boden der Hülse in die Fasern eingekoppelt, sondern durchläuft vorher einen Fortsatz, in welchem es mehrfach zu Totalreflektionen kommt, so dass sich das Licht unterschiedlicher Lichtfarben, insbesondere bei Verwendung einer RGB-LED, mischt.

Der Fortsatz ist zusammen mit der Hülse einstückig ausgebildet. Es handelt sich dabei um ein Spritzgussteil aus transparentem Kunststoff.

Es hat sich herausgestellt, dass durch einen derartigen Fortsatz auf einfache Weise Inhomogenitäten in der Intensitätsverteilung der verschiedenen Lichtfarben weitgehend vermeiden lassen. Die Bereitstellung einer Hülse mit Fortsatz verursacht weder bei der Herstellung des Bauteils noch bei der Montage nennenswerten Mehraufwand.

Es hat sich zudem herausgestellt, dass sich die Einkoppeleffizienz zumindest bei geeigneter Anpassung des Durchmessers des Fortsatzes auf Lichtquelle und Faserbündel kaum verschlechtert. Insbesondere kann gegenüber einer herkömmlichen Hülse ohne Fortsatz eine Verringerung der Einkoppeleffizienz von weniger als 10 % erreicht werden.

Der Fortsatz bildet dadurch einen Lichtleiter aus, so dass dieser aus einem Kunststoff besteht, welcher eine höhere Brechzahl als Luft aufweist. Da die Hülse in aller Regel in einem Gehäuse verbaut ist, ist es nicht erforderlich, den Fortsatz mit einer Beschichtung aus gegenüber dem Material des Fortsatzes niedriger brechendem Material zu versehen. Denkbar ist eine derartige Beschichtung aber auch, um die Wirkung des Fortsatzes als Lichtleiter zu verbessern.

Bei einer bevorzugten Ausführungsform der Erfindung weist der Fortsatz zumindest abschnittsweise einen polygonalen Querschnitt auf. Insbesondere ist der Fortsatz zumindest vier-, vorzugsweise fünf- und besonders bevorzugt zumindest sechseckig ausgebildet. Durch die polygonale Ausgestaltung wird aufgrund der Reflektionen an den Wänden in unterschiedlichen Richtungen die Mischwirkung des Fortsatzes verbessert.

Der Fortsatz ist vorzugsweise zumindest abschnittsweise mit konstantem Querschnitt ausgebildet. Es ist aber denkbar, den Fortsatz auch abschnittsweise konisch auszubilden oder den Fortsatz derart auszubilden, dass sich die Form des Querschnitts von der Lichtquelle zur Hülse hin ändert.

Es ist insbesondere bei der Verwendung von RGB-LEDs denkbar, dass der Fortsatz im Bereich der LED eine dreieckige oder an ein Dreieck angenäherte Form aufweist und dass sich die Form sodann zur Hülse hin in einen der runden Form besser angepassten Querschnitt, beispielsweise einen sechseckigen Querschnitt, ändert.

Über unterschiedliche Querschnittsflächen kann sich der Fortsatz zugleich dem Durchmesser von Lichtquelle und Faserbündel anpassen.

Denkbar ist ferner auch, einen Fortsatz bereitzustellen, dessen geometrische Form sich abschnittsweise durch einen Körper mit polygonalem Boden und polygonalem Deckel beschreiben lässt, wobei der Deckel gegenüber dem Boden in einem Winkel > 0° verdreht ist. Durch einen so sich ändernden Winkel der Seitenwände wird auch das eingehende Licht quasi verdreht und es kommt zu statistischen Streueffekten, die die Einkoppeleffizienz verbessern.

Der Fortsatz hat vorzugsweise eine Länge von mehr als dem 1,5-fachen des Bündeldurchmessers des Faserbündels, besonders bevorzugt mehr als dem 2,5-fachen des Bündeldurchmessers und von weniger als dem 7,5-fachen des Bündeldurchmessers, besonders bevorzugt weniger als dem 5-fachen des Bündeldurchmessers.

Es hat sich herausgestellt, dass bereits ein Fortsatz mit einer Höhe des 2,5-fachen des Bündeldurchmessers eine recht gute Mischwirkung hat. Bei einer Länge des 5-fachen des Bündeldurchmessers wird die Mischwirkung noch verbessert, die Länge sollte aber möglichst klein gehalten werden, um den Bauraum im Gehäuse klein zu halten.

Der Durchmesser des Fortsatzes ist kleiner als der Durchmesser der angrenzenden restlichen Hülse.

Insbesondere beträgt der Durchmesser des Fortsatzes zwischen dem 0,75-fachen des Bündeldurchmessers und dem 1,5-fachen des Bündeldurchmessers, vorzugsweise zwischen dem 1-fachen des Bündeldurchmessers und dem 1,15-fachen des Bündeldurchmessers.

Insbesondere weist der Fortsatz auch den 0,75 bis 1,5-fachen, vorzugsweise den 1 bis 1,5-fachen des Durchmessers der Lichtquelle auf.

Es versteht sich, dass unter dem Durchmesser im Falle eines von der Kreisform abweichenden Querschnitts die Länge der längsten Strecke verbunden wird, welche zwei Punkte des Querschnitts des Fortsatzes bzw. der Lichtquelle oder des Faserbündels miteinander verbindet.

Vorzugsweise ist die emittierende Fläche der Lichtquelle vollständig vom Fortsatz überdeckt.

Bei einer Weiterbildung der Erfindung weist der Fortsatz und/oder die Lichtquelle zumindest ein Formschlusselement auf.

Die Lichtquelle ist als ein auf einer Platine angeordneter LED-Chip ausgebildet. Auf der Platine können nunmehr beispielsweise Formschlusselemente in Form von Bohrungen oder Vorsprüngen angeordnet sein, welche in korrespondierende Formschlusselemente eingreifen, die Teil der Hülse sind oder mit der Hülse verbunden sind.

In der Regel weist die Beleuchtungsvorrichtung ein Gehäuse auf, in welches die Hülse eingesteckt ist.

Eine derartige Steckverbindung ist nach dem aus der Praxis bekannten Stand der Technik dabei ebenfalls ein Formschlusselement, welches die Position der Hülse in dem Gehäuse und damit relativ zu der in dem Gehäuse angeordneten Lichtquelle bestimmt.

Durch ein weiteres Formschlusselement an der Vorderseite der Hülse bzw. am Fortsatz wird die Genauigkeit verbessert, mit welcher die Lichteintrittsfläche des Fortsatzes gegenüber der Lichtquelle positioniert ist. Insbesondere kann so eine Verkippung der Hülse im Gehäuse weitgehend vermieden werden.

Die Lichteintrittsfläche des Fortsatzes sitzt vorzugsweise nicht direkt auf der Lichtquelle auf. So wird insbesondere eine direkte Wärmeübertragung in den Fortsatz vermieden.

Vielmehr ist vorzugsweise zwischen Lichteintrittsfläche der Hülse bzw. des Fortsatzes ein Spalt vorgesehen. Dieser Spalt hat insbesondere eine Höhe von 0,05 mm bis 5 mm, besonders bevorzugt von 0,1 mm bis 1 mm.

Die Erfindung betrifft des Weiteren eine Hülse für eine Beleuchtungsvorrichtung, wie sie vorstehend beschrieben ist. Die Hülse besteht aus einem transparenten Kunststoff. Insbesondere besteht die Hülse aus Polycarbonat oder Polymethylmethacrylat. Auch andere transparente Kunststoffe wie Cyclo-Olefin-Copolymere etc. können verwendet werden. Die Hülse weist einen zumindest abschnittsweise topfförmigen Abschnitt zum Einführen eines Faserbündels auf. Vor dem Abschnitt zum Einführen des Faserbündels umfasst die Hülse einen Fortsatz mit einem kleineren Durchmesser, welcher zusammen mit der Hülse einstückig ausgebildet ist und welcher einen Lichtmischer ausbildet.

Es versteht sich, dass der Fortsatz nicht topfförmig oder hohl, sondern aus Vollmaterial ausgebildet ist.

### Kurzbeschreibung der Zeichnungen

Die Erfindung soll im Folgenden bezugnehmend auf die in den Figuren Fig. 1 bis Fig. 7 dargestellten Ausführungsbeispiele näher erläutert werden.
Fig. 1 und Fig. 2 zeigen jeweils perspektivische Ansichten verschiedener Ausführungsformen einer erfindungsgemäßen Beleuchtungsvorrichtung.
Fig. 3 zeigt einen Querschnitt durch ein seitenemittierendes Faserbündel.
Fig. 4 zeigt eine Lichtquelle in Form eines RGB-Chips.
Fig. 5 und Fig. 6 zeigen perspektivische Ansichten von zwei Ausführungsbeispielen einer erfindungsgemäßen Hülse.
Fig. 7 zeigt die in Fig. 5 dargestellte Hülse in einer axialen Schnittansicht.

### Detaillierte Beschreibung der Zeichnungen

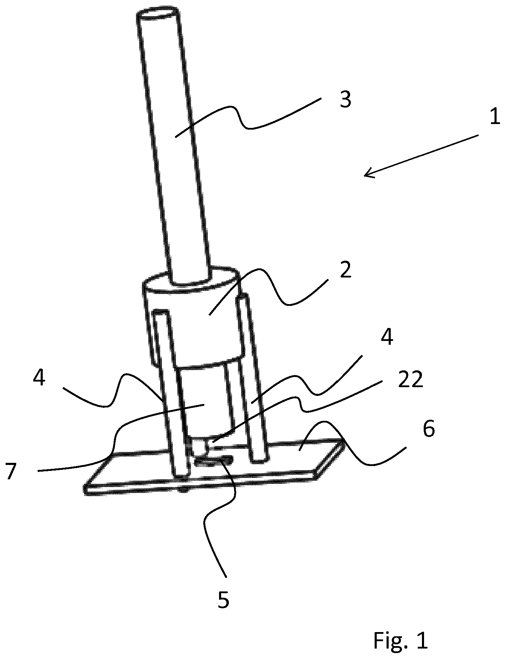

Fig. 1 zeigt eine Beleuchtungsvorrichtung 1 in einer ersten Ausführungsform der Erfindung.

Die Beleuchtungsvorrichtung 1 umfasst ein seitenemittierendes Faserbündel 3, welches in eine Hülse 2 eingesteckt und dort mittels eines transparenten, lichtleitenden Klebstoffes (nicht dargestellt) fixiert ist.

Die Hülse 2 umfasst auf der dem Faserbündel 3 gegenüberliegenden Seite einen Fortsatz 7, welcher in diesem Ausführungsbeispiel zylindrisch ausgebildet ist und welcher als Lichtmischer wirkt.

Die Lichtquelle besteht in diesem Ausführungsbeispiel aus einer LED 5, welche insbesondere als RGB-Chip ausgebildet ist und welche auf einer Platine 6 angeordnet ist.

Die Platine 6 ist in der Regel in einem Gehäuse (nicht dargestellt) verbaut, in welches die Hülse 2 eingesteckt wird.

Der Fortsatz 7 der Hülse 2 wird über der LED 5 positioniert, so dass Licht der LED 5 zunächst in den Fortsatz 7 und sodann über die Hülse 2 in das Faserbündel 3 eingekoppelt wird.

Zwischen der Lichteintrittsfläche des Fortsatzes 7 und der LED 5 befindet sich ein Spalt 22, der eine direkte Wärmeübertragung verhindert. In diesem Ausführungsbeispiel umfasst die Hülse 2 angeformte Formschlusselemente 4. Die Formschlusselemente 4 können integraler Bestandteil der vorzugsweise aus Spritzguss bestehenden Hülse 2 sein.

In diesem Ausführungsbeispiel sind drei Formschlusselemente 4 vorgesehen und die Formschlusselemente 4 sind als Stifte ausgebildet, welche in korrespondierende Bohrungen der Platine 6 greifen.

Durch die Formschlusselemente 4 ist die Position der Hülse nicht nur durch das Einstecken im Gehäuse bestimmt, sondern die Hülse 2 wird vorn, nämlich am Fortsatz 7, horizontal genau über der LED 5 gehalten. So wird eine Verkippung der Hülse 2 verhindert.

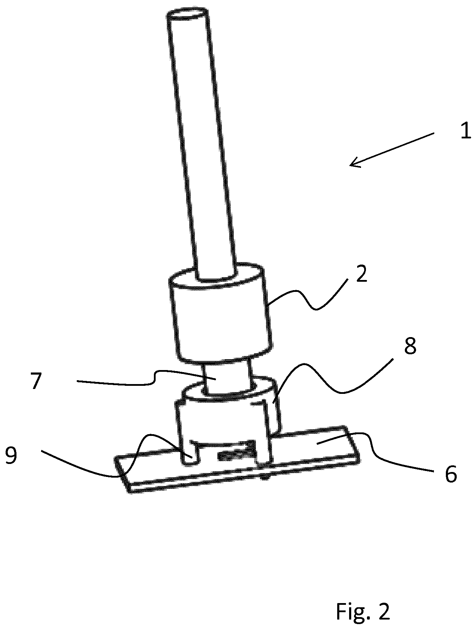

Fig. 2 zeigt eine alternative Ausführungsform einer Beleuchtungsvorrichtung 1.

Im Unterschied zu der in Fig. 1 dargestellten Ausführungsform ist als Formschlusselement ein Haltering 8 vorgesehen, welcher seinerseits Formschlusselemente 9 in Form von Stiften umfasst, über welche der Haltering 8 auf die Platine 6 gesetzt ist.

Die Hülse 2 wird nunmehr mit dem Fortsatz in den Haltering 8 eingesteckt und ebenfalls zumindest in der Ebene der Platine 6 formschlüssig gehalten.

Denkbar ist aber auch, dass der Haltering 8 zugleich einen Anschlag für die Hülse bildet und so auch einen axialen Formschluss bewirkt.

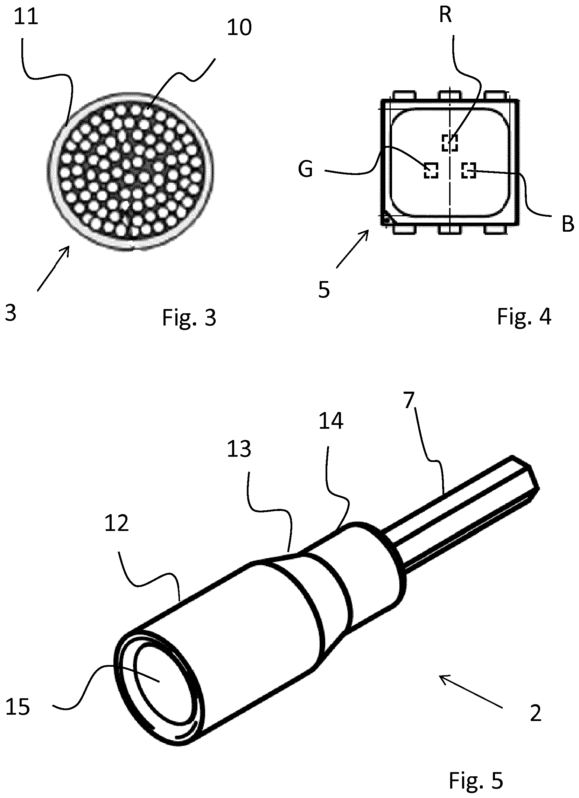

Fig. 3 zeigt schematisch eine Schnittansicht eines seitenemittierenden Faserbündels 3.

Das Faserbündel 3 umfasst eine Vielzahl von Fasern 10 aus Glas.

Die Fasern 10 sind vorzugsweise als Glasfasern ausgebildet und umfassen in der Regel einen lichtleitenden Kern, welcher mit einem Cladding aus einem Material mit einer niedrigeren Brechzahl umhüllt ist.

Das Licht kann beispielsweise über Streupartikel im Kern der Fasern 10 oder über Defektstellen am Fasermantel ausgekoppelt werden.

Die Fasern 10 des Faserbündels 3 sind in einen Schlauch 11 eingelegt. Dieser besteht in der Regel aus einem elastischen Kunststoff. Das Faserbündel 3 ist so biegsam.

Fig. 4 zeigt eine Draufsicht auf eine LED 5, wie sie für die Erfindung Verwendung findet.

Die LED 5 ist als RGB-Chip ausgebildet und umfasst die Einzel-LEDs in den Farben G (Grün), R (Rot) und B (Blau).

Fig. 5 zeigt eine perspektivische Ansicht einer weiteren Ausführungsform einer Hülse 2.

Die Hülse 2 umfasst in dieser Ausführungsform einen Abschnitt zum Einführen 12 des Faserbündels und weist mithin zu einer Seite eine Öffnung 15 auf.

In die Öffnung 15 wird das Faserbündel, welches vorzugsweise an seiner Spitze von seinem Schlauch befreit wurde, eingeschoben, wobei die Hülse vorher mit einem Klebstoff aufgefüllt wurde. Die Faserenden müssen dafür nicht poliert werden und können nach dem Einführen auch unterschiedliche Abstände zum Boden der Hülse einnehmen, sowie auch ungeordnet eingeführt sein

Von außen gesehen schließt sich dem Abschnitt zum Einführen 12 ein verjüngender Abschnitt 13 sowie ein mittlerer Abschnitt 14 an. Die Spitze der Hülse 2 bildet ein Fortsatz 7, welcher in diesem Ausführungsbeispiel hexagonal ausgebildet ist. Der Fortsatz 7 hat einen kleineren Durchmesser als der Rest der Hülse und dient als Lichtmischer.

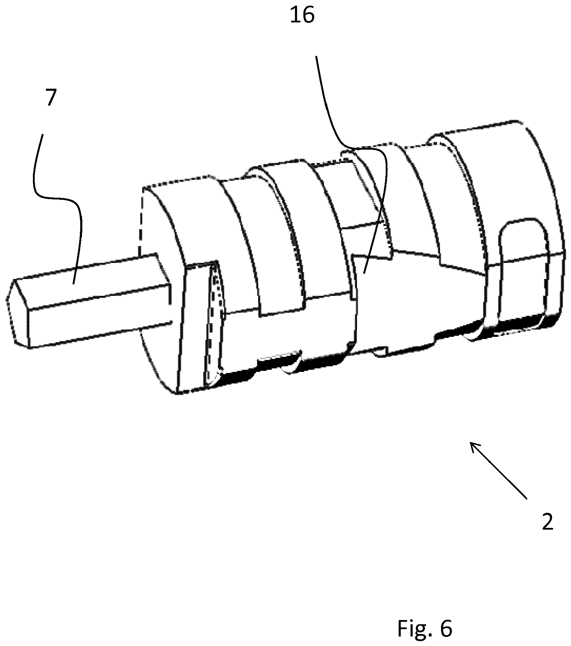

Fig. 6 zeigt eine weitere Ausführungsform einer Hülse 2. Im Unterschied zu der in Fig. 5 dargestellten Ausführungsform ist zu erkennen, dass die Hülse außen eine Mehrzahl von Formschluss-/Einrastelementen 16 aufweist, um diese in ein Gehäuse einzustecken und dort formschlüssig etwa durch Einrasten und/oder Drehen zu fixieren.

Auch diese Hülse 2 weist einen Fortsatz 7 auf, welcher als Zylinder mit hexagonaler Querschnittsfläche ausgebildet ist.

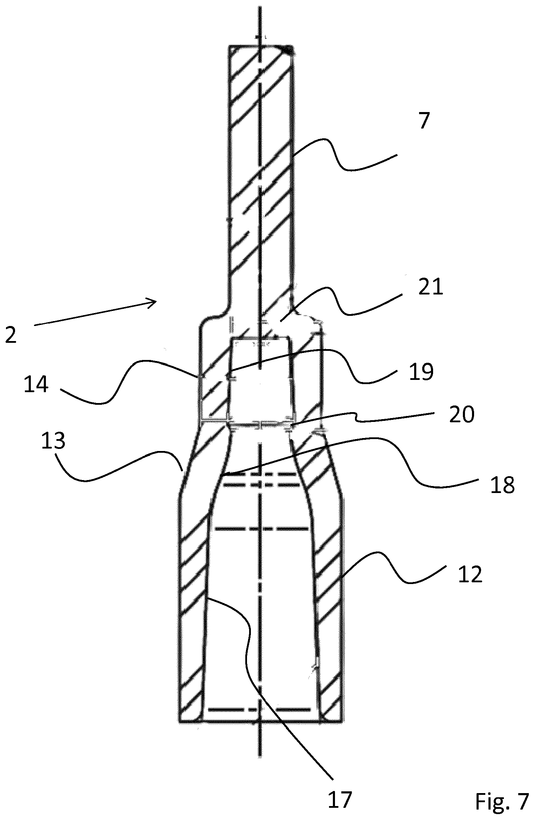

Fig. 7 zeigt eine Schnittansicht der in Fig. 5 dargestellten Hülse 2.

Zu erkennen ist, dass bereits der Abschnitt zum Einführen 12 des Faserbündels eine sich verjüngende Innenwand 17 aufweist. Die konische Form bereits in diesem Bereich dient dem leichteren Einführen. Denkbar ist aber auch eine nicht konische Form.

Sodann schließt sich der verjüngende Abschnitt 13 an, in welchen sich die Innenwand 18 gegenüber dem Abschnitt zum Einführen 12 stärker verjüngt.

Dieser Abschnitt dient dem Zusammenführen der vom Schlauch befreiten Einzelfasern.

An den sich verjüngenden Abschnitt 13 schließt sich der mittlere Abschnitt 14 an. In diesem Abschnitt sind die Innenwände 19 entweder parallel angeordnet oder verjüngen sich gegenüber dem Abschnitt 13 weniger. Hierdurch wird eine Parallelausrichtung der Einzelfasern an der Spitze des Faserbündels erreicht.

Hierzu trägt des Weiteren bei, dass der Innendurchmesser des Abschnitts 14 im Übergangsbereich kleiner ist als der Innendurchmesser des Abschnitts 13. So wird eine Einschnürung 20 ausgebildet, in welcher die Fasern zusammengeführt sind.

Der Boden 21 der Hülse 2 geht in den Fortsatz 7 über. Der Fortsatz 7 hat einen kleineren Durchmesser als die Hülse, insbesondere im Bereich des Bodens 21. Aus Gründen der mechanischen Stabilität sollte die Dicke des Bodens 21 im Bereich der Wanddicken der restlichen Hülse liegen. Aus Effizienzgründen sollte der Boden 21 aber auch nicht viel dicker als die Wand der Hülse sein.

Es versteht sich, dass die Beleuchtungsvorrichtung beispielsweise auch mehrarmig ausgebildet sein kann oder dass beispielsweise auch beidseitig das Licht in ein Faserbündel eingekoppelt werden kann.

Durch die Erfindung konnte auf einfache Weise eine seitenemittierende Beleuchtungsvorrichtung bereitgestellt werden, bei welcher ein inhomogener Farbeindruck vermieden werden kann.

### Bezugszeichenliste

- 1: Beleuchtungsvorrichtung
- 2: Hülse
- 3: Faserbündel
- 4: Formschlusselement
- 5: LED
- 6: Platine
- 7: Fortsatz
- 8: Haltering
- 9: Formschlusselement
- 10: Faser
- 11: Schlauch
- 12: Abschnitt zum Einführen
- 13: verjüngender Abschnitt
- 14: mittlerer Abschnitt
- 15: Öffnung
- 16: Formschluss-/Einrastelement
- 17: Innenwand
- 18: Innenwand
- 19: Innenwand
- 20: Einschnürung
- 21: Boden
- 22: Spalt

## Patentansprüche

1. Beleuchtungsvorrichtung (1), umfassend zumindest ein seitenemittierendes Faserbündel (3) und eine Lichtquelle (5), welche als LED ausgebildet ist, wobei das Faserbündel (3) in eine Hülse (2) eingesetzt und dort mittels eines transparenten, lichtleitenden Klebstoffs fixiert ist, wofür die Hülse (2) einen topfförmigen Abschnitt aufweist,
und wobei die Hülse (2) auf einer dem Faserbündel (3) gegenüberliegenden Seite einen Fortsatz aufweist, welcher einen Lichtmischer ausbildet, wobei die Hülse (2) einen Boden (21) aufweist, der in den Fortsatz (7) übergeht, wobei der Fortsatz (7) der Hülse (2) über der Lichtquelle positioniert ist, so dass Licht zunächst in den Fortsatz (7) und sodann über die Hülse (2) in das Faserbündel (3) eingekoppelt wird,
wobei der Fortsatz (7) aus transparentem Vollmaterial ausgebildet ist, und wobei die Beleuchtungseinrichtung dadurch charakterisiert ist, dass der Fortsatz (7) zusammen mit der Hülse (2) aus einem transparenten Kunststoff ausgebildet ist, und dadurch, dass der Fortsatz (7) einen kleineren Durchmesser als die Hülse (2) im Bereich des Bodens hat.

2. Beleuchtungsvorrichtung (1) nach Anspruch 1, **dadurch gekennzeichnet, dass** der Fortsatz (7) zumindest abschnittsweise einen polygonalen Querschnitt aufweist, insbesondere zumindest vier, vorzugsweise fünf- und besonders bevorzugt sechseckig.

3. Beleuchtungsvorrichtung (1) nach einem der vorstehenden Ansprüche, **dadurch gekennzeichnet, dass** der Fortsatz (7) eine Länge vom 1,5-fachen des Bündeldurchmessers bis zum 7,5-fachen des Bündeldurchmessers, vorzugsweise vom 2,5-fachen des Bündeldurchmessers bis zum 5-fachen des Bündeldurchmessers aufweist.

4. Beleuchtungsvorrichtung (1) nach einem der vorstehenden Ansprüche, **dadurch gekennzeichnet, dass** der Fortsatz (7) einen Durchmesser aufweist, welcher dem 0,75-fachen bis 1,5-fachen, vorzugsweise dem 1-fachen bis 1,5-fachen Durchmesser der Lichtquelle (5) entspricht.

5. Beleuchtungsvorrichtung (1) nach einem der vorstehenden Ansprüche, **dadurch gekennzeichnet, dass** der Fortsatz (7) und/oder die Lichtquelle (5) zumindest ein Formschlusselement (4) aufweist.

6. Beleuchtungsvorrichtung (1) nach einem der vorstehenden Ansprüche, **dadurch gekennzeichnet, dass** die Beleuchtungsvorrichtung (1) ein Gehäuse aufweist, in welches die Hülse (2) eingesteckt ist, wobei die Lichtquelle (5) als zumindest eine auf einer Platine (6) angeordnete Halbleiterlichtquelle ausgebildet ist, welche in dem Gehäuse angeordnet ist.

7. Beleuchtungsvorrichtung (1) nach dem vorstehenden Anspruch, **dadurch gekennzeichnet, dass** über zumindest ein Formschlusselement (4) zwischen Platine und Fortsatz (7) die Position des Fortsatzes gegenüber der Lichtquelle (5) bestimmt ist.

8. Beleuchtungsvorrichtung (1) nach einem der vorstehenden Ansprüche, **dadurch gekennzeichnet, dass** sich die Form des Querschnitts des Fortsatzes (7) von der Lichtquelle (5) zur Hülse (2) hin ändert, insbesondere von einer dreieckigen zu einer mehr als dreieckigen Form.

## Claims

1. A lighting device (1), comprising at least one side-emitting fibre bundle (3) and a light source (5) in the form of an LED;
wherein the fibre bundle (3) is inserted in a sleeve (2) and is fixed there by means of a transparent light-conducting adhesive, the sleeve (2) having a pot-shaped portion for this purpose;
and wherein the sleeve (2) has an extension at an end opposite to the fibre bundle (3), which extension defines a light mixer;
wherein the sleeve (2) has a base (21) that merges into the extension (7);
wherein the extension (7) of the sleeve (2) is positioned above the light source such that light is first injected into the extension (7) and then via the sleeve (2) into the fibre bundle (3); wherein the sleeve (2) is made of a transparent solid material;
and wherein the lighting device is **characterised in that**
the extension (7) together with the sleeve (2) is made of a transparent plastics material; and that the extension (7) has a smaller diameter than the sleeve (2) in the area of the base.

2. The lighting device (1) according to claim 1, **characterised in that** the extension (7) has a polygonal cross section, at least in portions thereof, in particular at least a quadrangular, preferably pentagonal, and most preferably hexagonal cross section.

3. The lighting device (1) according to any one of the preceding claims, **characterised in that** the extension (7) has a length that is from 1.5 times to 7.5 times the bundle diameter, preferably from 2.5 times to 5 times the bundle diameter,

4. The lighting device (1) according to any one of the preceding claims, **characterised in that** the extension (7) has a diameter that is from 0.75 times to 1.5 times, preferably from 1 to 1.5 times the diameter of the light source (5).

5. The lighting device (1) according to any one of the preceding claims, **characterised in that** the extension (7) and/or the light source (5) has/have at least one form-fitting element (4).

6. The lighting device (1) according to any one of the preceding claims, **characterised in that** the lighting device (1) comprises a housing into which the sleeve (2) is inserted, wherein the light source (5) is in the form of at least one semiconductor light source arranged on a circuit board (6) that is arranged in the housing.

7. The lighting device (1) according to the preceding claim, **characterised in that** the position of the extension relative to the light source (5) is defined by at least one form-fitting element (4) between the circuit board and the extension (7).

8. The lighting device (1) according to any one of the preceding claims, **characterised in that** the cross-sectional shape of the extension (7) changes from the light source (5) towards the sleeve (2), in particular from a triangular shape to a shape with more than three angles.

## Revendications

1. Dispositif d'éclairage (1), comprenant au moins un faisceau de fibres (3) à émission latérale et une source lumineuse (5) qui est réalisée sous forme de LED, le faisceau de fibres (3) étant inséré dans un manchon (2) et y étant fixé à l'aide d'un adhésif transparent conducteur de lumière, le manchon (2) présentant à cet effet une partie en forme de godet,
et le manchon (2) présentant, sur un côté opposé au faisceau de fibres (3), un prolongement qui forme un mélangeur de lumière, le manchon (2) présentant un fond (21) qui se raccorde au prolongement (7), le prolongement (7) du manchon (2) étant positionné au-dessus de la source lumineuse, de sorte que la lumière est couplée d'abord dans le prolongement (7) et ensuite dans le faisceau de fibres (3), par l'intermédiaire du manchon (2),
le prolongement (7) étant réalisé à partir d'un matériau plein transparent, et le dispositif d'éclairage étant **caractérisé en ce que** le prolongement (7), conjointement avec le manchon (2), est réalisé dans une matière plastique transparente, et **en ce que** le prolongement (7) présente un plus petit diamètre que le manchon (2) dans la région du fond.

2. Dispositif d'éclairage (1) selon la revendication 1, **caractérisé en ce que** le prolongement (7) présente au moins dans certaines portions une section transversale polygonale, notamment au moins quadrangulaire, de préférence pentagonale, et de manière particulièrement avantageuse hexagonale.

3. Dispositif d'éclairage (1) selon l'une des revendications précédentes, **caractérisé en ce que** le prolongement (7) présente une longueur valant de 1,5 fois le diamètre du faisceau à 7,5 fois le diamètre du faisceau, de préférence de 2,5 fois le diamètre du faisceau à 5 fois le diamètre du faisceau.

4. Dispositif d'éclairage (1) selon l'une des revendications précédentes, **caractérisé en ce que** le prolongement (7) présente un diamètre qui vaut 0,75 fois à 1,5 fois, de préférence 1 fois à 1,5 fois le diamètre de la source lumineuse (5).

5. Dispositif d'éclairage (1) selon l'une des revendications précédentes, **caractérisé en ce que** le prolongement (7) et/ou la source lumineuse (5) présente au moins un élément à complémentarité de forme (4) .

6. Dispositif d'éclairage (1) selon l'une des revendications précédentes, **caractérisé en ce que** le dispositif d'éclairage (1) présente un boîtier dans lequel est inséré le manchon (2), la source lumineuse (5) étant réalisée sous la forme d'au moins une source lumineuse à semiconducteur qui est disposée sur une platine (6) et est placée dans le boîtier.

7. Dispositif d'éclairage (1) selon la revendication précédente, **caractérisé en ce que** la position du prolongement par rapport à la source lumineuse (5) est déterminée par l'intermédiaire d'au moins un élément à complémentarité de forme (4) entre la platine et le prolongement (7).

8. Dispositif d'éclairage (1) selon l'une des revendications précédentes, **caractérisé en ce que** la forme de la section transversale du prolongement (7) se modifie depuis la source lumineuse (5) en direction du manchon (2), passant notamment d'une forme triangulaire à une forme plus que triangulaire.
